# EUROPÄISCHE PATENTSCHRIFT

(11) **EP 0 646 420 B1**
(45) Veröffentlichungstag und Bekanntmachung des Hinweises auf die Patenterteilung: **12.11.1997**
(21) Anmeldenummer: 94114470.1
(22) Anmeldetag: 14.09.1994
(51) Int. Cl.: B05D 7/00, B05D 7/16, B05D 1/36

(54) **Verfahren zur Herstellung von Mehrschichtlackierungen**
Process for making multilayer coatings
Procédé pour réaliser des revêtements multicouches

(30) Priorität: 17.09.1993 DE 4331673
(43) Veröffentlichungstag der Anmeldung: 05.04.1995
(73) Patentinhaber: Herberts Gesellschaft mit beschränkter Haftung, 42285 Wuppertal (DE)
(72) Erfinder: Böhmert, Reiner, D-42283 Haan (DE); Kimpel, Matthias, Dr., D-58332 Schwelm (DE); Klein, Klausjörg, D-42289 Wuppertal (DE); Stein, Manfred, Dr., D-50354 Hürth (DE)
(74) Vertreter: Türk, Gille, Hrabal, Leifert

(56) Entgegenhaltungen:
- EP-A- 0 525 867
- PATENT ABSTRACTS OF JAPAN vol. 13, no. 95 (C-573) 6. März 1989 & JP-A-63 274 800 (TOSHIYUKI OTA) 11. November 1988

## Beschreibung

Die Erfindung betrifft ein Verfahren zur Herstellung einer Mehrschichtlackierung durch Trocken-in-Naß-Applikation eines pulverförmigen Überzugsmittels auf eine im wesentlichen unvernetzte, zuvor elektrophoretisch abgeschiedene Lackschicht, gefolgt von gemeinsamen Einbrennen dieser Lackschichten.

Die industrielle Lackierung ist gekennzeichnet durch Bestrebungen, die Lackierprozesse hinsichtlich Umweltfreundlichkeit und Energieverbrauch zu optimieren. Wege zu diesem Ziel sind z.B. der Einsatz pulverförmiger Lacksysteme und die Einsparung energieaufwendiger Verfahrensschritte, wie z.B. Verminderung der Anzahl von Einbrennschritten. Dabei ist es üblich, um die unteren Lackschichten nicht zu stark thermisch zu belasten, daß bei den Einbrennschritten der einzelnen Schichten die Einbrenntemperaturen von Folgeschichten unter denen der vorherigen Schichten liegen.

Die Applikation pulverförmiger Überzugsmittel auf eine getrocknete, jedoch unvernetzte, zuvor elektrophoretisch abgeschiedene Lackschicht ist bekannt aus der JP 62 238 398 und aus der JP 63 274 800.

In der EP-B-0 240 565 wird ausgeführt, daß Pulverlacke auf Basis fester aromatischer Epoxidharze mit im Durchschnitt weniger als zwei Epoxidgruppen pro Molekül keine ausreichende Beständigkeit bei Beanspruchung nach ASTM D 2794 (Schlagtiefung, Impact-Test) besitzen. Es werden daher Pulverlacke auf Basis von Epoxidharzen mit einer Epoxid-Punktionalität größer als 2 eingesetzt. Die Möglichkeit einer Trocken-in-Naß-Applikation wird nicht beschrieben.

Die EP-A-0 292 771 beschreibt gegen Steinschlag schützende Überzugsmittel auf Basis von Epoxidharzen, die durch chemische Modifizierung mittels Dienpolymeren elastifiziert sind. Die Überzugsmittel können pulverförmig sein und auf eine vernetzte oder unvernetzte Elektrotauchlackschicht appliziert werden.

Die EP-A-0 440 292 erläutert, daß Stabilitäts- und Viskositätsprobleme in derartigen elastomermodifizierte Epoxidharze enthaltenden Pulverlacken, wie sie in EP-A-0 292 771 beschrieben sind, auftreten. Daher beschreibt die EP-A-0 440 292 Pulverlacke auf Epoxidharzbasis zu formulieren, die elastomermodifizierte phenolische Härter enthalten. Auch diese Pulverlacke können auf eine vernetzte oder unvernetzte Elektrotauchlackschicht appliziert werden, wobei Mehrschichtlackierungen mit guter Beständigkeit bei Beanspruchung nach ASTM D 2794 und guter Steinschlagbeständigkeit erhalten werden.

Es hat sich gezeigt, daß bei aus den vorstehend beschriebenen Pulverlakken gebildeten Überzugsschichten eine Vergilbungs- und Versprödungsneigung besteht.

Weiterhin wird in der EP-A-0 449 359 beschrieben, die Stabilitätsprobleme der elastomermodifizierten Epoxidharze der EP-A-0 292 771 zu überwinden durch Herstellung eines andersartig elastomermodifizierten Epoxidharzes. Dazu wird ein carboxyl-funktionelles hydriertes Dien-Vinylaromat-Blockcopolymer in flüssigem Epoxidharz dispergiert und unter Zusatz von Katalysator und Polyphenol mit diesen umgesetzt. Die auf Basis des so elastomermodifizierten Epoxidharzes formulierten Pulverlacke können auf vernetzte oder unvernetzte Elektrotauchlackschichten appliziert werden unter Ausbildung steinschlagbeständiger Mehrschichtlackierungen.

All diese Pulverlacke mit derartig elastomermodifizierten Bindemitteln oder Härtern - insbesondere der in EP-A-0 449 359 beschriebene Pulverlack - haben gemeinsam, daß die elastomermodifizierten Komponenten in aufwendiger Weise synthetisiert werden müssen.

Es bestand die Aufgabe, ein Verfahren zur Herstellung einer Mehrschichtlackierung mit Auftrag eines pulverförmigen Überzugsmittels auf eine Elektrotauchlackschicht bereitzustellen, das zu vergilbungsfreien Überzügen mit einer guten Zwischenschichthaftung und guten mechanischen Eigenschaften, wie einer guten Elastizität, einer guten Steinschlag- und Impactbeständigkeit und einer guten, fehlerfreien Oberflächenstruktur führt. Das Verfahren sollte darüber hinaus mit pulverförmigen Überzugsmitteln durchführbar sein, deren Bindemittel einfach herzustellen oder handelsüblich sind.

Es hat sich gezeigt, daß diese Aufgabe gelöst werden kann, wenn bei der Herstellung von Mehrschichtlackierungen unter Trocken-in-Naß-Applikation eines Pulverlacks auf eine aus einem Elektrotauchlack abgeschiedene Überzugsschicht bestimmte Bedingungen bezüglich der minimalen Einbrenntemperaturen der beiden Schichten eingehalten werden.

Einen Gegenstand der Erfindung bildet daher ein Verfahren zur Herstellung von Mehrschichtlackierungen durch elektrophoretische Abscheidung einer ersten Überzugsschicht auf einem elektrisch leitenden Substrat aus einem ersten, wäßrigen Überzugsmittel, Auftrag einer zweiten Überzugsschicht auf der Basis eines zweiten, pulverförmigen Überzugsmittels, und gemeinsames Einbrennen der so erhaltenen Überzugsschichten, das dadurch gekennzeichnet ist, daß man für die zweite Überzugsschicht ein pulverförmiges Überzugsmittel auf der Basis von Bindemitteln, die frei von auf Dienen basierenden Polymereinheiten sind, verwendet, wobei man die Überzugsmittel so wählt, daß das Intervall der minimalen Einbrenntemperatur der zweiten Überzugsschicht über dem der ersten Überzugsschicht liegt oder dieses so überlappt, daß die Untergrenze des Intervalls der zweiten Überzugsschicht oberhalb der Untergrenze des Intervalls der ersten Überzugsschicht liegt.

Entgegen dem vorstehend beschriebenen Stand der Technik ist es erfindungsgemäß nicht notwendig durch Dienpolymer-Modifizierung gummielastifizierte Bindemittel oder Härter in den Pulverlacken einzusetzen. Eine bevorzugte Ausführungsform der Erfindung betrifft daher die Verwendung von pulverförmigen Überzugsmitteln für die zweite zu erstellende Überzugsschicht, deren Bindemittelanteile frei von Elastomer-Modifizierungen sind.

Das Intervall der minimalen Einbrenntemperatur bezeichnet den Bereich von 10°C unter bis 10°C über der niedrigsten Temperatur, die bei einer definierten Einbrenndauer von beispielsweise 20 Minuten notwendig ist, um eine Vernetzung der betreffenden Lackschicht zu erzeugen. Der Zustand der Vernetzung der Elektrotauchlackschicht kann beispielsweise durch Einwirkung von Aceton auf die eingebrannte Elektrotauchlackschicht und anschließenden Kratztest ermittelt werden. Dabei kann beispielsweise wie folgt vorgegangen werden:

Auf die eingebrannte und mindestens 4 Stunden gelagerte Elektrotauchlackschicht wird ein mit Aceton getränkter Wattebausch aufgelegt und mit einem Uhrglas bedeckt. Nach 2 Minuten werden Uhrglas und Wattebausch entfernt und es wird eine weitere Minute gewartet. Zeigen sich dann bei der Elektrotauchlackschicht bei Beurteilung mit dem bloßen Auge keine Veränderungen und ist die Elektrotauchlackschicht durch einfachen mechanischen Aufwand, wie Kratzen mit einem stumpfen Gegenstand, beispielsweise Kratzen mit dem Daumennagel oder dem stumpfen Ende eines Hornspatels (entsprechend einem Auflagegewicht von 4 Kg), nicht entfernbar, so ist die Vernetzung eingetreten. Dieser Test wird an einer Reihe von lackierten Versuchsblechen, die jeweils 20 Minuten bei unterschiedlichen Temperaturen eingebrannt worden sind, wiederholt, um die Mindesteinbrenntemperatur zu ermitteln. Als Intervall der minimalen Einbrenntemperatur wird dann der Bereich definiert, der um 10°C nach oben und nach unten von der so ermittelten Mindesteinbrenntemperatur abweicht.

Der Zustand der Vernetzung der zweiten, der aus dem pulverförmigen Überzugsmittel gebildeten Lackschicht kann beispielsweise nach ASTM-Norm D 2794 ermittelt werden. Dabei kann beispielsweise wie folgt vorgegangen werden:

An der auf ein übliches Karosseriestahlblech (Blechdicke 0,8 mm) in einer Schichtdicke von 70 µm aufgebrachten, eingebrannten und mindestens 24 Stunden bei 20°C gelagerten Lackschicht wird ein Direct-Impact-Test (vgl. ASTM D 2794) durchgeführt. Dazu wird ein 4-pound-Gewicht mit einem Kugeldurchmesser von 5/8 Inch aus unterschiedlicher Höhe, gemessen in Inch, senkrecht im freien Fall auf die zu testende Lackschicht fallen gelassen. Übersteht die eingebeulte Lackschicht diesen Test bei einem Wert von 20 Inch-pound (Produkt aus Fallhöhe und Gewicht) und größer, ohne daß mit dem bloßen Auge Beschädigungen wie Risse oder Abplatzungen zu beobachten sind, so ist die Vernetzung eingetreten. Dieser Test wird an einer Reihe von lackierten Versuchsblechen wiederholt, um die Mindesteinbrenntemperatur zu ermitteln. Als Intervall der minimalen Einbrenntemperatur wird dann der Bereich definiert, der jeweils um 10°C nach oben und nach unten von der so ermittelten Mindesteinbrenntemperatur abweicht.

Beim erfindungsgemäßen Verfahren können als elektrophoretisch abscheidbare Überzugsmittel an sich bekannte anodisch oder kathodisch abscheidbare Elektrotauchlacke (ETL), die keiner besonderen Beschränkung unterliegen, verwendet werden.

Es sind wäßrige Überzugsmittel mit einem Festkörper von beispielsweise 10 - 20 Gew.-%. Dieser besteht aus üblichen Bindemitteln, die ionische oder in ionische Gruppen überführbare Substituenten sowie zur chemischen Vernetzung fähige Gruppen tragen, sowie gegebenenfalls Pigmenten und weiteren Additiven. Die ionischen Gruppen können anionische oder in anionische Gruppen überführbare Gruppen, z.B. -COOH-Gruppen oder kationische oder in kationische Gruppen überführbare, z.B. Amino-, Ammonium-, z.B. quartäre Ammonium-, Phosphonium- und/oder Sulfonium-Gruppen sein. Bevorzugt sind Bindemittel mit basischen Gruppen. Besonders bevorzugt sind stickstoffhaltige basische Gruppen. Diese Gruppen können quaternisiert vorliegen oder sie werden mit einem üblichen Neutralisationsmittel, z.B. einer organischen Monocarbonsäure, wie z.B. Ameisensäure, Essigsäure, wie dem Fachmann geläufig, in ionische Gruppen überführt.

Beispiele für erfindungsgemäß einsetzbare anionische Gruppen enthaltende anodisch abscheidbare Elektrotauchlack-Bindemittel und Lacke (ATL) sind in der DE-A 28 24 418 beschrieben. Es handelt sich beispielsweise um Bindemittel auf Basis von Polyestern, Epoxidharzestern, Poly(meth)acrylaten, Maleinatölen oder Polybutadienölen mit einem Gewichtsmittel der Molmasse von beispielsweise 300 - 10000 und einer Säurezahl von 35 - 300 mg KOH/g. Die Bindemittel tragen -COOH, -SO₃H und/oder -PO₃H₂-Gruppen. Die Harze können nach Neutralisation von mindestens einem Teil der sauren Gruppen in die Wasserphase überführt werden. Die Lacke können auch übliche Vernetzer enthalten, z.B. Triazinharze, Vernetzer, die umesterungsfähige Gruppen enthalten oder blockierte Polyisocyanate.

Bevorzugt sind jedoch kathodische Elektrotauchlacke (KTL) auf Basis kationischer bzw. basischer Bindemittel. Solche basischen Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (M_{w}) der Basisharze liegt bevorzugt bei 300 bis 10000. Beispiele für solche Basisharze sind Aminoacrylatharze, Aminoepoxidharze, Aminoepoxidharze, mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige Gruppen enthalten.

Beispiele für in kathodischen Tauchlack (KTL)-Bädern eingesetzte Basisharze und Vernetzer, die erfindungsgemäß verwendet werden können, sind in der EP-A 082 291, EP-A 234 395, EP-A 209 857, EP-A 227 975, EP-A 178 531, EP-A 333 327, EP-A 310 971, EP-A 456 270, US 3 922 253, EP-A 261 385, EP-A 245 786, DE-A 33 24 211, EP-A 476 514 beschrieben. Diese Harze können allein oder im Gemisch eingesetzt werden.

Besonders zweckmäßig ist es, für das erfindungsgemäße Verfahren kationische Tauchlack-Bäder (KTL-Bäder) einzusetzen, deren Intervall der minimalen Einbrenntemperatur relativ niedrig liegt. Dies kann einerseits durch Wahl entsprechender Bindemittel/Härtersysteme, also aus den Bindemittelsystemen selbst heraus erfolgen. Im Rahmen der Erfindung hat es sich jedoch auch als günstig erwiesen, das Intervall der minimalen Einbrenntemperatur durch Zusatz von Wismut in Form organischer Wismutkomplexe und/oder als Wismutsalze organischer Carbonsäuren auf niedrige Werte zu senken. Bei den Salzen kann es sich um solche einer organischen Mono- oder Polycarbonsäure handeln. Als Beispiel für komplexbildende Liganden sei z.B. Acetylaceton genannt. Es sind jedoch auch andere organische Komplexbildner mit einer oder mehreren komplexbildenden Gruppe möglich. Beispiele für geeignete organische Carbonsäuren, von denen sich im erfindungsgemäßen Verfahren einsetzbare Wismutsalze ableiten, sind aromatische, araliphatische und aliphatische Mono- oder Dicarbonsäuren. Bevorzugt sind die Wismutsalze von organischen Monocarbonsäuren, insbesondere mit mehr als zwei C-Atomen, wie beispielsweise Wismutbenzoat-, -propionat, -octoat, -neodecanoat. Besonders bevorzugt werden im erfindungsgemäßen Verfahren die Wismutsalze von Hydroxycarbonsäuren. Beispiele sind Wismutsalicylat, Wismut-4-hydroxybenzoat, Wismutlactat, Wismutdimethylolpropionat. Insbesondere sind die Wismutsalze von aliphatischen Hydroxycarbonsäuren geeignet.

Der Mengenanteil der organischen Wismutverbindung im erfindungsgemäß verwendbaren KTL-Bad beträgt 0,1 bis 5 Gew.-%, bevorzugt 0,5 bis 3,0 Gew.-%, berechnet als Wismut und bezogen auf den Bindemittelfestkörper des KTL-Bades. Dabei ist darauf zu achten, daß die Menge der gegebenenfalls eingebrachten Carboxylationen nicht die Eigenschaften des KTL negativ beeinflußt. Die organische Wismutverbindung kann im im erfindungsgemäßen Verfahren einsetzbaren KTL in der wäßrigen oder in der dispersen Phase gelöst, feinverteilt, z.B. in kolloidaler Form, oder als vermahlenes Pulver vorliegen. Bevorzugt soll sie eine zumindest anteilige Wasserlöslichkeit besitzen.

Verfahrenstechnisch ist der Prozeß der Elektrotauchlackierung im allgemeinen mit einem Ultrafiltrationsprozeß gekoppelt. Dabei gehen wasserlösliche Bestandteile aus dem Elektrotauchlack durch eine Membran in das Ultrafiltrat über. Das erfindungsgemäße Verfahren kann unter Verwendung membrangängiger organischer Wismutverbindungen durchgeführt werden.

Bevorzugt werden die organischen Wismutverbindungen jedoch unter den vorstehend beschriebenen Wismutverbindungen so ausgewählt, daß bei den in den KTL-Bädern herrschenden pH-Werten nur eine geringe Membrangängigkeit vorliegt, d.h. das Ultrafiltrat sollte beim erfindungsgemäßen Verfahren im wesentlichen frei von Wismutverbindungen sein. Eine Verminderung des Wismutgehaltes im KTL-Bad kann auf diesem Wege vermieden werden.

Die Einarbeitung der vorstehend beschriebenen organischen Wismutverbindungen in den KTL kann auf verschiedene Weise erfolgen. Beispielsweise kann die organische Wismutverbindung vor Zugabe wesentlicher Mengen von Wasser als Verdünnungsmittel der neutralisierten Bindemittellösung bei erhöhter Temperatur zugegeben und anschließend unter Rühren homogenisiert werden. Die organische Wismutverbindung, bevorzugt das organische Wismutsalz, kann beispielsweise bei 60 bis 80°C portionsweise zugegeben und anschließend unter Rühren bei 60 bis 100°C, vorzugsweise bei 60 bis 70°C, mehrere Stunden, vorzugsweise 4 bis 8 Stunden homogenisiert werden. Bei Verwendung von Hydroxycarbonsäuren, wie z.B. Milchsäure oder Dimethylolpropionsäure, als Neutralisationsmittel für die Bindemittel kann alternativ auch mit den entsprechenden Mengen an Wismutoxid oder -hydroxid gearbeitet werden, wobei das entsprechende Wismutsalz in situ gebildet wird. Dabei ist die Säuremenge gegenüber dem erstgenannten Verfahren um den zur Salzbildung notwendigen Anteil anzupassen.

Weiterhin ist die Einarbeitung der organischen Wismutverbindung in den KTL z.B. auch als Bestandteil von üblichen Pigmentpasten möglich. Ebenso können die organischen Wismutverbindungen, wenn sie wasserlöslich sind bzw. in einem Lösungsvermittler gelöst vorliegen, der KTL-Bindemitteldispersion oder dem KTL nachträglich zugesetzt werden. Es ist jedoch darauf zu achten, daß eine gleichmäßige Verteilung im KTL-Bad vorliegt.

Bevorzugte KTL-Bäder sind solche, die keine gesundheitlich bedenklichen Schwermetallverbindungen, wie z.B. Bleiverbindungen enthalten. Beispiele dafür sind beschrieben in EP-A-304 754, EP-A-341 596, EP-A-347 785, EP-A-414 199 und DE-A-4 222 596. Weitere Beispiele für derartige bleifreie KTL-Bäder sind solche, die durch Umesterung und/oder Umamidierung und/oder Umurethanisierung und/oder durch Reaktion endständiger Doppelbindungen vernetzbare, kationische Lackbindemittel und Wismut in Form eines organischen Wismutkomplexes und/oder eines Wismutsalzes einer organischen Carbonsäure, wie vorstehend genannt, enthalten.

Zusätzlich zu den Basisharzen und gegebenenfalls vorhandenem Vernetzer kann das Elektrotauchlack (ETL)-Überzugsmittel Pigmente, Füllstoffe und/oder lackübliche Additive enthalten. Als Pigmente kommen die üblichen anorganischen und/oder organischen Pigmente in Frage. Beispiele sind Ruß, Titandioxid, Eisenoxid, Kaolin, Talkum oder Siliciumdioxid. Werden die Überzugsmittel als Korrosionsschutzgrundierung eingesetzt, so ist es möglich, daß sie Korrosionsschutzpigmente enthalten. Beispiele dafür sind Zinkphosphat oder organische Korrosionsinhibitoren. Die Art und Menge der Pigmente richtet sich nach dem Verwendungszweck der Überzugsmittel. Sollen klare Überzüge erhalten werden, so werden keine oder nur transparente Pigmente, wie z.B. mikronisiertes Titandioxid oder Siliziumdioxid eingesetzt. Sollen deckende Überzüge appliziert werden, so sind bevorzugt farbgebende Pigmente im Elektrotauchlackbad enthalten.

Die Pigmente können zu Pigmentpasten dispergiert werden, z.B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive für ETL-Überzugsmittel möglich. Beispiele dafür sind Netzmittel, Neutralisationsmittel, Verlaufsmittel, Katalysatoren, Antischaummittel sowie übliche Lösemittel. Über die Art und Menge der Katalysatoren kann das Vernetzungsverhalten beeinflußt werden. Es kann vorteilhaft sein, das ETL-Überzugsmittel frei von Katalysatoren zu formulieren.

Im Rahmen der vorliegenden Erfindung ist es bevorzugt, daß die eingesetzten Elektrotauchlacke ein Pigment/Bindemittelverhältnis von maximal 1 : 1, bezogen auf das Gewicht, aufweisen. Bevorzugt sind Elektrotauchlacke, insbesondere kathodische Elektrotauchlacke, mit Pigment/Bindemittelverhältnissen von 0,1 : 1 bis 0,7 : 1.

Die eingesetzten Elektrotauchlacke besitzen Intervalle der minimalen Einbrenntemperatur, die bevorzugt im Bereich von 80 und 190°C, besonders bevorzugt von 100 und 180°C und insbesondere bevorzugt unter 160°C liegen. Die Intervalle der minimalen Einbrenntemperatur der Elektrotauchlacke können mit den Intervallen der minimalen Einbrenntemperatur der nachfolgenden pulverförmigen Überzugsmittel überlappen. Die untere Grenze des Intervalls der minimalen Einbrenntemperatur der Elektrotauchlacke liegt dabei unterhalb der unteren Grenze des Intervalls der minimalen Einbrenntemperatur des nachfolgend applizierten pulverförmigen Überzugsmittels. Besonders bevorzugt liegt das Intervall der Elektrotauchlackschicht unterhalb dessen der nachfolgenden Schicht.

Bei den erfindungsgemäß als zweite Schicht trocken-in-naß auf die unvernetzte Elektrotauchlackschicht applizierbaren Überzugsmitteln handelt es sich um pulverförmige Überzugsmittel, z.B. pulverförmige Decklacke, Füller und Steinschlagschutzmaterialien, deren Intervall der minimalen Einbrenntemperatur über dem der Elektrotauchlackschicht liegt, oder dieses so überlappt, daß die Untergrenze seines Intervalls oberhalb der entsprechenden Untergrenze der Elektrotauchlackschicht liegt.

In den nach dem erfindungsgemäßen Verfahren applizierbaren pulverförmigen Überzugsmitteln kommen Bindemittelsysteme zum Einsatz, bestehend aus Basisharz und Härter. Unter Basisharz ist die filmbildende höhermolekulare Komponente eines Pulverlacks zu verstehen, die im allgemeinen mindestens 50 Gew.-% der zugrundeliegenden Basisharz/Härter-Kombination ausmacht, während die Härterkomponente im allgemeinen maximal 50 Gew.-% innerhalb dieser Kombination beträgt. Die Auswahl des verwendeten Bindemittelsystems im pulverförmigen Überzugsmittel unterliegt keinen prinzipiellen Beschränkungen mit Ausnahme der vorstehend gemachten Ausführungen bezüglich der relativen Lage des Intervalls der minimalen Einbrenntemperatur. Erfindungsgemäß ist es bevorzugt, nur handelsübliche oder ohne großen Syntheseaufwand verfügbare Bindemittelsysteme einzusetzen. Die aus Basisharz und Härter gebildeten Bindemittelsysteme sollen frei von auf Dienen basierenden Polymereinheiten sein und damit insbesondere keine autoxidativ angreifbaren olefinischen Doppelbindungen enthalten. Geeignet sind beispielsweise übliche für Pulverlacke eingesetzte Basisharze. Beispiele sind: Polyesterharze, (Meth)acrylcopolymere, Epoxidharze, Phenolharze, Polyurethanharze, Siloxanharze. Die Basisharze weisen beispielsweise Glasübergangstemperaturen von 30 - 120°C, bevorzugt unter 80°C, auf und besitzen beispielsweise zahlenmittlere Molmassen von 500 - 20000, bevorzugt unter 10000. Die Härter besitzen z.B. zahlenmittlere Molmassen von 84 - 3000, bevorzugt unter 2000. Es können verschiedene Basisharze und Härter miteinander gemischt werden, sofern dabei ein voll miteinander verträgliches Bindemittelsystem erhalten wird, erkennbar beispielsweise an einem Mindestglanz eines daraus hergestellten und vollständig eingebrannten Lackfilms von 75 Einheiten unter einem Betrachtungswinkel von 60 Grad.

Basisharze und Härter tragen untereinander komplementäre funktionelle Gruppen, die eine Vernetzungsreaktion bei den Einbrennbedingungen des Pulverlackes erlauben. Beispiele für funktionelle Gruppen sind Carboxylgruppen, Epoxidgruppen, aliphatisch oder aromatisch gebundene OH-Gruppen, Silanolgruppen, Isocyanatgruppen, blockierte Isocyanatgruppen, Anhydridgruppen, primäre oder sekundäre Aminogruppen, geblockte Aminogruppen, zur ringöffnenden Addition befähigte N-heterocyclische Gruppen wie z.B. Oxazolingruppen, (Meth)acryloylgruppen, CH-acide-Gruppen wie z.B. Acetoacetatgruppen.

Die Auswahl der miteinander reagierenden Gruppen ist dem Fachmann geläufig. Beispiele findet man in H. Kittel, Lehrbuch der Lacke und Beschichtungen, Band 4, S. 356, Verlag W.A. Colomb, Berlin, 1976. Es können gegebenenfalls verschiedene reaktive Gruppen miteinander kombiniert werden. Das kann über Bindemittel geschehen, die verschiedene reaktive funktionelle Gruppen tragen, oder es werden Gemische von unterschiedlichen Härtern und/oder Basisharzen eingesetzt.

Die verschiedenen funktionellen Gruppen können zugleich am Basisharz und/oder Härter vorhanden sein, sofern sie bei den Herstellungsbedingungen untereinander nicht reaktiv sind. Die Basisharze und/oder Härter enthalten im Mittel mindestens 2 funktionelle Gruppen pro Molekül. Das Verhältnis von Basisharz zu Härter beträgt im allgemeinen 98 : 2 bis 50 : 50. Bevorzugt liegt es zwischen 95 : 5 und 70 : 30. Es können auch mehrere Basisharze und/oder mehrere Härter im Gemisch eingesetzt werden.

Beispiele für im Rahmen der vorliegenden Erfindung geeignete Basisharze und Härter sowie Basisharz/Härter-Kombinationen findet man in "The Science of Powder Coatings, Vol. 1" von D.A. Bate, Selective Industrial Training Associates Limited, London, 1990.

Im Rahmen der vorliegenden Erfindung bevorzugt ist die Trocken-in-Naß-Applikation von pulverförmigen Überzugsmitteln auf Basis solcher Basisharz/Härter-Kombinationen, die beim Einbrennen eine Vernetzung unter Bildung von Urethan- oder Carbonsäureestergruppen gestatten. Beispiele für unter Bildung von Urethangruppen vernetzende Systeme sind Kombinationen von festen, hydroxyfunktionellen Polyestern mit festen, blockierten Polyisocyanaten. Solche Polyester besitzen beispielsweise Hydroxylzahlen im Bereich von 25 bis 55 mg KOH/g, während die blockierten Polyisocyanate latente NCO-Zahlen von beispielsweise 8 bis 19 aufweisen. Besonders bevorzugt sind die im Sinne einer Polyaddition ohne Abspaltung organischer Verbindungen unter Bildung von Estergruppen vernetzenden Systeme. Beispiele dafür sind pulverförmige Überzugsmittel auf Basis von Polyepoxiden, wie z.B. Epoxidharze oder auch niedermolekulare Polyepoxidverbindungen wie Triglycidylisocyanurat, in Kombination mit carboxyl- und/oder carbonsäureanhydridfunktionellen Verbindungen. Bevorzugte Epoxidharze sind handelsübliche, feste aromatische Epoxidharze, z.B. auf Basis von Diphenolen wie Bisphenol A. Die Epoxidharze besitzen bevorzugt eine durchschnittliche Epoxidfunktionalität zwischen 1,05 und 2 pro Molekül und es ist besonders bevorzugt, daß sie nicht mit hydrierten oder unhydrierten Dienpolymeren modifiziert sind. Ihre Epoxidäquivalentgewichte betragen z.B. zwischen 455 und 4000. Beispiele für feste carboxyl- und/oder carbonsäureanhydridfunktionelle Verbindungen, die als Härter oder als Basisharz dienen können, sind Polycarbonsäuren und/oder deren Anhydride oder bevorzugt nichtlineare, saure Polyester mit einer durchschnittlichen Carboxylfunktionalität von größer als 2 pro Molekül. Die Säurezahlen dieser Carboxylverbindungen betragen beispielsweise zwischen 20 und 450 mg KOH/g.

Die erfindungsgemäß als zweite Schicht einsetzbaren pulverförmigen Überzugsmittel können für Pulverlacke übliche Füllstoffe und/oder Pigmente enthalten und sie besitzen bevorzugt Pigment/Bindemittel-Gewichtsverhältnisse zwischen 0 : 1 und 0,5 : 1. Unter Bindemittel ist hier die Summe aus Basisharz plus Härter zu verstehen.

Überraschenderweise hat es sich gezeigt, daß erfindungsgemäß besonders günstige mechanische Eigenschaften, insbesondere eine hohe Schlagfestigkeit erzielt werden, wenn als Pulverlacke solche eingesetzt werden, die keine Füllstoffe und/oder Pigmente enthalten. Selbst bei Abwesenheit organischer Füllstoffe lassen sich ausgezeichnete Schlagzähigkeiten erzielen. Die erfindungsgemäße Verfahrensweise ist somit besonders geeignet zur Herstellung von Steinschlagschutz-Zwischenschichten und/oder Füllerschichten bei Mehrschichtlackierungen. Dieser Effekt ist besonders überraschend, da es bisher in der Praxis als notwendig angesehen wurde Steinschlagschutzschichten und Füllerschichten mit relativ hohen Pigment-und Füllstoffgehalten zu versehen.

Dennoch ist es erfindungsgemäß möglich Pulverlacke einzusetzen, die übliche Füllstoffe und/oder Pigmente enthalten. Ein derartiger Zusatz kann beispielsweise aus optischen Gründen günstig sein. Aus optischen Gründen kann es auch zweckmäßig sein, die Pulverlacke mit löslichen Farbstoffen zu färben; diese Variante ist besonders für die bevorzugte Ausführungsform der pigment- und füllstoffreien Pulverlacke geeignet.

Beispiele für anorganische Füllstoffe und Pigmente sind Ruß, Titandioxid, Zinksulfid, Eisenoxidpigmente, Chromoxidpigmente, Siliziumdioxid, Magnesiumsilikat (z.B. Talkum), Aluminiumsilikat (z.B. Kaolin), Calciumcarbonat (z.B. Kreide), Bariumsulfat (z.B. Schwerspat), aber auch Korrosionsschutzpigmente wie z.B. Blei- oder Chromatverbindungen. Beispiele für organische Pigmente sind Azopigmente, Phthalocyaninpigmente. Im Rahmen der vorliegenden Erfindung hat es sich gezeigt, daß, falls pigmentierte Pulverlacke für die Verwendung als Steinschlagschutzgrund oder Füller eingesetzt werden sollen, solche bevorzugt sind, die a) organische Füllstoffe bei einem Gewichtsverhältnis von organischen Füllstoff zu Bindemittel zwischen 0,05 : 1 und 0,5 : 1 - gegebenenfalls in Kombination mit anorganischen Pigmenten und/oder Füllstoffen - enthalten, oder b) ein niedriges Pigment/Bindemittel-Gewichtsverhältnis von unter 0,1 : 1 besitzen. Als organische Füllstoffe sind verschiedene organische Polymerpulver geeignet, die allein oder im Gemisch eingesetzt werden können. Beispiele sind Polymerpulver aus vernetzten Harnstoff-Aldehyd-Harzen, Triazin-Aldehyd-Harzen, Phenol-Aldehyd-Harzen, aus Polyacrylnitril oder aus Polyamid. Diese Polymerpulver besitzen hohe Glasübergangstemperaturen oberhalb von 70°C (gemessen nach DSC). Die Glasübergangstemperaturen werden so gewählt, daß unter den Herstellungs- und Applikationsbedingungen der pulverförmigen Überzugsmittel eine Erweichung der vernetzten oder unvernetzten Polymerpulver nicht auftritt. Dementsprechend werden die Schmelztemperaturen der zum Einsatz kommenden Polymerpulver oberhalb von 130°C ausgewählt oder die Polymerpulver sind nicht unzersetzt schmelzbar, wobei der Zersetzungspunkt bei hohen Temperaturen oberhalb von 220°C liegt. Die Polymerpulver sind unter Herstell- und Prozessbedingungen chemisch inert und besitzen beispielsweise durchschnittliche Teilchendurchmesser zwischen 0,1 und 100 µm. Der Teilchendurchmesser richtet sich nach der gewünschten Schichtdicke und wird so gewählt, daß er ausreichend klein ist, so daß in der aus dem pulverförmigen Überzugsmittel applizierten und eingebrannten Überzugsschicht und auf dem gegebenenfalls auf diese applizierten Lackfilm eine homogene und glatte Oberfläche erzielt wird. Im allgemeinen sind Teilchengrößen der polymeren Füllstoffteilchen bis zu 10 µm bevorzugt, besonders bevorzugt liegt die Obergrenze der Teilchengröße bei 5 µm. Die Untergrenze liegt bevorzugt bei etwa 1 µm. Die Teilchengrößenverteilung der Polymerpulver ist variabel.

Die Polymerpulver können in üblicher, dem Fachmann bekannter und in der Literatur beschriebener Weise hergestellt werden. Sie können bereits bei der Herstellung als Pulver anfallen, die anschließend auf die gewünschte Korngröße vermahlen werden. Durch geeignete Reaktionsführung ist es aber auch möglich, von vornherein gewünschte Korngrößen zu erzielen. Die angefallenen Pulver können nach Abtrennung aus dem Reaktionsmedium eingesetzt werden.

Werden Aldehyd-Harzpulver verwendet, so sind diese hoch vernetzt und weisen keinen Schmelzpunkt auf. Die vernetzten Aldehyd-Polymerpulver können durch Reaktion von Harnstoff, Triazin und/oder Phenol mit Aldehyd, bevorzugt mit Formaldehyd oder Formaldehyd abspaltenden Verbindungen hergestellt werden. Die Bedingungen hinsichtlich der eingesetzten Mengen an Reaktionspartnern, der Reaktionstemperatur und des Reaktionsmediums, in welcher die Reaktion durchgeführt wird, können so gewählt werden, daß vernetzte, unschmelzbare Massen entstehen. Dem Fachmann sind solche Bedingungen geläufig.

Es können auch Polymerpulver auf Basis von vernetzten Triazin-Harzen verwendet werden, wozu bevorzugt vernetzte Polymermassen aus Melamin-Aldehyd, Benzoguanamin-Aldehyd und Acetoguanamin-Aldehyd gehören. Verwendbare vernetzte Harnstoff-Harze und vernetzte Phenolharze werden z.B. in Methoden der Organischen Chemie (Houben-Weyl), Band 2, Makromolekulare Stoffe, in den Kapiteln "Polyadditions- bzw. Polykondensationsprodukte von Carbonyl- und Thiocarbonylverbindungen" auf den Seiten 193 bis 365 beschrieben.

Beispiele für als Polymerpulver verwendbare vernetzte Phenol-Aldehydharze werden z.B. auch unter dem Stichwort "Resit" beschrieben in "Chemie der Phenolharze" von K. Hultzsch, Springer-Verlag, 1950.

Werden Polyacrylnitrilpulver als Polymerpulver verwendet, so haben diese bevorzugt ein Molekulargewicht (Mw) von über 100000. Sie sind nicht chemisch vernetzt, sie haben aber keinen Schmelzpunkt, da sie sich bei Temperaturen oberhalb von 300°C zersetzen, bevor sie schmelzen können.

Die zur erfindungsgemäßen Verwendung geeigneten Polyacrylnitrilpulver können Homo- oder Copolymere sein; sie enthalten mindestens 70 bis 100 Gew.-% (bevorzugt über 90 Gew.-%) einpolymerisiertes Acrylnitril und/oder Methacrylnitril. Den Rest können ein oder mehrere Comonomere bilden. Beispiele für Comonomere sind Acrylsäureester und Methacrylsäureester von C₁ bis C₂₂-Alkoholen, wie Methylmethacrylat, Butylmethacrylat, Octylmethacrylat, Ethylacrylat, Isobutylacrylat, Acrylsäureester und Methacrylsäureester von perfluorierten C₁ bis C₂₂-Alkoholen, vinylaromatische Monomere mit bis zu 20 C-Atomen, z.B. Styrol, Vinyltoluol; Ester anderer ungesättigter Säuren, wie Maleinsäure- und Fumarsäureester von C₁ bis C₂₂-Alkoholen, Vinylmonomere, wie Vinylchlorid, Vinylether und Vinylester und Mono- und Diolefine, wie Ethylen und Butadien.

Weiterhin können beispielsweise ungesättigte Carbon-, Sulfon- oder Phosphonsäuren und ihre Ester als Comonomere eingesetzt werden, wie Crotonsäure, Itaconsäure, Vinylsulfonsäure, Acrylamidopropylmethansulfonsäure, Vinylphosphonsäure und deren Ester. Zu den geeigneten Comonomeren gehören ebenfalls ungesättigte primäre, sekundäre und tertiäre Amine, wie z.B. Dimethylaminoneopentylmethacrylat, Dimethylaminoneopentylacrylat, 2-N-Morpholinoethylmethacrylat, 2-N-Morpholinoethylacrylat oder auch Amide der Acryl- und Methacrylsäure, wie z.B. Acrylamid, Dimethylmethacrylamid und Methylbutylacrylamid.

Zusätzlich können auch andere funktionelle Monomere, die copolymerisierbar sind, eingesetzt werden. Sie können Hydroxy-, Silan- oder Epoxidgruppen enthalten, wie z.B. Vinyltrimethoxysilan, Vinyltributoxysilan, Methacryloxypropyltrimethoxysilan, Vinyltris(methoxyethoxy)silan, Vinyltriacetoxysilan, N-Methylolacrylamid sowie dessen Alkylether, N-Methylolmethacrylamid und dessen Alkylether, Hydroxyethylmethacrylat, Hydroxybutylacrylat, Glycidylacrylat, Glycidylmethacrylat und Hydroxyethylacrylat.

Die Herstellung der Polyacrylnitrilpulver erfolgt nach üblichen Verfahren, die dem Fachmann bekannt sind. Beispiele sind die Suspensionspolymerisation und die Emulsionspolymerisation. Sie werden beispielsweise in "Chemische Technologie" von Winnacker-Küchler, Band 6, Organische Technologie 2, Karl Hanser-Verlag München-Wien 1982, beschrieben. Durch Wahl der entsprechenden Monomere können Eigenschaften der Polyacrylnitrilpulver beeinflußt werden, wie z.B. Glasübergangstemperatur und Schmelzverhalten. Die Teilchengrößenverteilung ist über das gewählte Herstellungsverfahren bzw. über die dabei benutzten Verfahrensparameter in der dem Fachmann geläufigen Weise beeinflußbar.

Die Auswahl der Monomeren, Comonomeren und der üblichen Hilfsstoffe erfolgt so, daß die Anforderungen an das Polyacrylnitrilpulver, wie Teilchendurchmesser, Glasübergangstemperatur, Molekulargewicht erreicht werden. Das Molekulargewicht (Mw) des pulverförmigen Polyacrylnitrils liegt bevorzugt bei mindestens 100000. Nach der Herstellung werden die Polyacrylnitrilpulver zu Pulvern getrocknet und dann gegebenenfalls nach weiterem Vermahlen eingesetzt.

Polyamidpulver, die als Polymerpulver verwendet werden, können aus Aminocarbonsäuren mit beispielsweise 6 bis 12 C-Atomen pro Molekül oder deren Lactamen hergestellt werden, z.B. aus epsilon-Caprolactam, omega-Aminododecansäure, Lauryllactam oder deren Gemischen. Geeignet sind auch die Polykondensationsprodukte aus Diaminen, z.B. Hexamethylendiamin, und Dicarbonsäuren, z.B. Adipinsäure, Sebacinsäure, Dodecandicarbonsäure und Terephthalsäure. Verwendet werden können auch Gemische aus Diaminen und Dicarbonsäuren und Gemische aus Lactamen, Diaminen und Säuren.

Um Polyamide mit höherem Gehalt an funktionellen Gruppen zu erhalten, besteht die Möglichkeit, Säuren oder Amine mit höherer Funktionalität zu verwenden, z.B. Trimellithsäure oder deren Anhydrid sowie Diethylentriamin.

Bei der Herstellung des Polyamids ist es bevorzugt, wenn mindestens 70 % der umsetzbaren Carboxylgruppen in Amidgruppen überführt werden. Weitere Umsetzungsmöglichkeiten bestehen z.B. in der Bildung von Estergruppen. Die Polyamide können durch Polyethersegmente in ihren Eigenschaften verändert werden, z.B. um Flexibilisierung zu erreichen.

In diesem Sinne zählen auch Polyesteramide und Copolyetheramide zu den Polyamiden, wenn mindestens 70 % der umsetzbaren Carboxylgruppen in Amidgruppen umgesetzt wurden.

Die technische Herstellung der Polyamide kann durch Polykondensation von Diaminen, bzw. Polyaminen mit Dicarbonsäuren bzw. Polycarbonsäuren durch Polykondensation von omega-Aminocarbonsäuren oder durch ringöffnende Polymerisation von Lactamen erfolgen. Die Herstellung kann in der Schmelze oder in Lösung durchgeführt werden. Während oder nach der Lösungspolymerisation kann das Polyamid gegebenenfalls in feinpulvriger Form vorliegen.

Das Zahlenmittel der Molmasse der verwendbaren Polyamide liegt bevorzugt über 500 g/mol, bevorzugt über 3000 g/mol. Die Polyamide enthalten pro Molekül mindestens 10, bevorzugt mindestens 15 Amidgruppen. Geeignete Polyamid-Pulver sind z.B. unter den Handelsbezeichnungen Orgasol (eingetragenes Warenzeichen) und Rilsan (eingetragenes Warenzeichen) von der Firma ATO-Chemie erhältlich.

Die Polyamidpulver sollen während des Einbrennens nicht oder zumindest nicht vollständig schmelzen.

Die Polymerpulver können auf die gewünschte Teilchengröße gebracht werden, wobei Mahlprozesse mit bekannten Mahlaggregaten zur Teilchenzerkleinerung bevorzugt werden.

Werden in den pulverförmigen Überzugsmitteln neben den Polymerpulvern zusätzlich die vorstehend schon erwähnten anorganischen Füllstoffe und/oder Pigmente verwendet, so liegt bevorzugt der Anteil an Polymerpulver bei 5 bis 99 Vol.-%, besonders bevorzugt bei 5 bis 60 Vol.-% der Summe der Volumina von Füllstoffen, Pigmenten plus Polymerpulver.

Weiterhin können in den pulverförmigen Überzugsmitteln die für Pulverlacke üblichen Additive enthalten sein. Beispiele dafür sind Verlaufshilfsmittel, Katalysatoren, Wachse, Entgasungsmittel wie z.B. Benzoin, Antioxidantien, Lichtschutzmittel, Haftvermittler, Gleitmittel, die Schmelzrheologie steuernde Mittel.

Die Herstellung der erfindungsgemäß einsetzbaren duroplastischen Pulverlacke erfolgt nach dem Fachmann bekannten Verfahren, z.B. durch Extrudieren der durch Mischen aller benötigten Komponenten fertig formulierten Pulverlacke in Form einer pastösen Schmelze, Abkühlen der Schmelze zu einem erstarrten Material, Grobzerkleinerung, Feinmahlung und nachgeschaltetes Sieben auf gewünschte Kornfeinheit (vgl. Ullmanns Enzyklopädie der technischen Chemie, Band 15, Seite 680, 4. Auflage, 1978, Verlag Chemie Weinheim; und H. Kittel, Lehrbuch der Lacke und Beschichtungen, Band 4, Seite 355, 1976, sowie Band 8, Teil 2, Seite 1 ff. 1980, Verlag W.A. Colomb Berlin). Die Korngröße der erfindungsgemäß einsetzbaren Pulverlacke liegt beispielsweise zwischen 10 und 300 µm, bevorzugt beträgt die obere Grenze 100 µm, besonders bevorzugt 60 µm.

Als Substrate für das erfindungsgemäße Verfahren sind elektrisch leitfähige Materialien, wie beispielsweise Metalle geeignet. Insbesondere geeignet sind z.B. Automobilkarossen oder Teile davon, sie können aus Metall - gegebenenfalls phosphatiert und bevorzugt umweltfreundlich, wie z.B. chrom-, nickel- und nitratfrei vorbehandelt - oder elektrisch leitendem oder mit einer elektrisch leitfähigen Schicht versehenen Kunststoff bestehen. Auf diese Substrate wird die erste Überzugsschicht, insbesondere in Form einer Korrosionsschutzgrundierung, elektrophoretisch in üblicher Weise abgeschieden.

Diese kann zur Entfernung nicht festhaftender überschüssiger Lackanteile mit einer wäßrigen Lösung abgespült und danach vor dem Trocken-in-Naß-Auftrag des nachfolgenden Überzugsmittels bevorzugt von anhaftender Feuchtigkeit befreit werden. Das geschieht z.B. durch Ablüften. Dieses kann beispielsweise durch IR-Strahlung und/oder durch einen gegebenenfalls erwärmten Luftstrom geschehen, der über das Substrat geführt wird. Die Temperatur des Luftstromes kann beispielsweise bei Raumtemperatur bis 120°C liegen. Dabei soll eine Vernetzung des Elektrotauchlackfilms nicht stattfinden.

Auf das so erhaltene mit einer unvernetzten ETL-Schicht versehene Substrat wird die zweite Schicht aus dem pulverförmigen Überzugsmittel, z.B. Steinschlagschutzgrund und/oder Füllerschicht aufgetragen. Der Pulverlack wird bevorzugt durch Spritzen aufgetragen. Beispiele dafür sind Tribospritzen und elektrostatische Pulversprühverfahren (EPS). Anschließend wird das Werkstück mit den beiden Überzugsschichten bei erhöhten Temperaturen, z.B. zwischen 130 und 220°C, bevorzugt über 150°C eingebrannt. Die Gesamtschichtdicke der eingebrannten und chemisch vernetzten Zweischichtlackierung, d.h. die Summe von ETL-Schicht plus erfindungsgemäß darauf applizierter Pulverlackschicht beträgt beispielsweise 40 bis 200 µm, bevorzugt 50 bis 120 µm. Wird der Pulverlack z.B. zur Erzeugung einer Füllerschicht eingesetzt, beträgt die Füllerschichtdicke z.B. zwischen 30 und 70 µm, bevorzugt zwischen 35 und 60 µm, bei Einsatz beispielsweise als Steinschlagschutzgrund beträgt die Schichtdicke zwischen 50 und 120 µm, bevorzugt zwischen 60 und 100 µm.

Das erfindungsgemäß trocken-in-naß auf eine unvernetzte ETL-Schicht applizierbare pulverförmige Überzugsmittel kann auch an einen Werkstück zugleich in unterschiedlicher Schichtdicke appliziert werden, beispielsweise zur gleichzeitigen Erzeugung einer Füller- und einer Steinschlagschutzgrundschicht. So kann z.B. im Fall der Lackierung von Automobilkarossen der Auftrag des Pulverlacks in Steinschlagschutzgrundtypischer Schichtdicke in besonders Steinschlaggefährdeten Karosseriebereichen, wie z.B. Schweller, Frontschürze, Teilbereiche der Motorhaube, etc. erfolgen, während der verbleibende Anteil an Karosseriefläche nur in füllertypischer Schichtdicke mit den Pulverlack lackiert wird.

Eine erfindungsgemäß erstellte Mehrschichtlackierung, die zunächst aus Zwei Schichten (ETL-Schicht und Pulverlackschicht) besteht, wird gemäß einer bevorzugten Ausführungsform der Erfindung mit einer oder mehreren weiteren Schichten überzogen. Hierzu ist es möglich, jedoch nicht notwendig, nach dem Einbrennen die Oberfläche des erhaltenen Zweischichtüberzugs einer Nachbehandlung zu unterziehen, z.B. durch Schleifen, um Fehlstellen zu beseitigen. Beispiele für die weiteren Schichten sind solche auf der Basis von Füllern, Decklacken oder Basislack/Klarlacksystemen. Die nachfolgenden Lackschichten können auf lösemittelhaltigen oder wasserverdünnbaren Überzugsmitteln basieren. Die Decklacke oder Basislacke sind farb- oder effektgebend; sie sind bevorzugt wasserverdünnbar. Vor Auftrag einer Decklack- oder Basislackschicht kann beispielsweise mit einem lösemittelhaltigen oder wasserverdünnbaren Füller überlackiert werden.

Vor dem Auftrag der Füller-, Decklack- oder Basislackschicht kann die aus unvernetzter ETL-Schicht und unvernetzter Pulverlackschicht bestehende Zweischichtlackierung angeliert werden. Dies geschieht bei einer Temperatur, die ein Verfließen der Pulverlackteilchen gestattet, eine chemische Vernetzung der ETL-Schicht und der Pulverlackschicht jedoch sicher ausschließt, beispielsweise bei 80 bis 130°C. Auf diese Weise besteht die Möglichkeit nach anschließender Applikation einer weiteren Lackschicht, bevorzugt einer Füllerschicht, auch drei Lackschichten gleichzeitig einzubrennen.

Die nach dem erfindungsgemäßen Verfahren hergestellten Überzüge weisen gute, optisch glatte Oberflächen auf. Die Haftung zwischen der ETL-Grundierungsschicht und der zweiten Schicht ist gut. Es ist eine feste Verbindung der beiden Schichten gegeben. Durch die abgestimmten Intervalle der minimalen Einbrenntemperatur lassen sich Oberflächenstörungen, wie z.B. Krater oder Blasen, vermeiden. Werden weitere Nachfolgeschichten aufgetragen, ist die Haftung sowie die Oberflächenglätte gut.

Bei erfindungsgemäßem Vorgehen lassen sich optisch glatte, steinschlagfeste Mehrschichtlackierungen mit guten mechanischen Eigenschaften erzeugen, die den Anforderungen in der Automobilserienlackierung genügen.

Die Erzeugung dieses Eigenschaftsspektrums ist bei erfindungsgemäßem Vorgehen möglich unter Verwendung von Pulverlacken auf Basis handelsüblicher Bindemittel und Härter, die keiner besonderen Modifizierung, beispielsweise Elastifizierung bedürfen.

### Beispiel 1 (Herstellung eines bleifreien KTL)

Ein bleifreier Kataphoreselack wurde gemäß EP-0 414 199 A2, Tabelle 3, Bindemittelkombination 2 hergestellt. Dabei enthielt der Kataphoreselack 0,5 Teile Ruß, 35,5 Teile Titandioxid, 5 Teile Hexylglykol, jeweils bezogen auf 100 Teile Festharz.

Das Intervall der minimalen Einbrenntemperatur dieses Kataphoreselacks wurde wie folgt festgestellt:

Durch kathodische Abscheidung auf üblichen Prüfblechen aus Karosseriestahl wurde jeweils eine Lackschicht in 20 µm Trockenschichtdicke ausgebildet. Nach Abspülen überschüssiger Lackanteile mit vollentsalztem Wasser und 5-minütigem Trocknen bei 80°C (Objekttemperatur) im Trockenofen (Abluftbetrieb) wurden die Prüfbleche 20 min. bei sich jeweils um in 10°C-Schritten unterscheidenden Objekttemperaturen, beginnend ab 120°C eingebrannt. Nach Abkühlen auf Raumtemperatur und 4-stündiger Lagerung wurde auf jedes Prüfblech für 2 min. ein acetongetränkter Wattebausch, der mit einem Uhrglas bedeckt wurde, aufgelegt und 1 min. nach Entfernung des Wattebausches die Vernetzung durch Kratzen mit dem Daumennagel (entsprechend einem Auflagegewicht von 4 Kg) an der lösemittelbelasteten Stelle geprüft. Die Lackschichten der bei 120, 130 und 140°C eingebrannten Prüfbleche ließen sich dabei entfernen. Die bei 150°C und 160°C eingebrannten Lackschichten widerstanden den Entfernungsversuchen. Damit beträgt das Intervall der minimalen Einbrenntemperatur 140 bis 160°C.

### Beispiel 2 (Herstellung von organischen Wismutsalzen)

Deionisiertes Wasser und Säure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca. 20°C gekühlt und 12 Stunden ohne Rühren belassen. Schließlich wird der Niederschlag abfiltriert, mit wenig Wasser und Ethanol gewaschen und bei einer Temperatur von 40 - 60°C getrocknet.

Folgende Salze werden unter Verwendung der angegebenen Mengenanteile hergestellt:
- Wismutlactat:: 466 Teile (1 Mol) Wismutoxid +
901 Teile (7 Mol) Milchsäure 70 % in Wasser
- Wismutdimethylolpropionat:: 466 Teile (1 Mol) Wismutoxid +
938 Teile (7 Mol) Dimethylolpropionsäure +
2154 Teile Wasser

### Beispiel 3 (Herstellung eines wismuthaltigen KTL)

a) 570 g eines Epoxidharzes auf Basis von Bisphenol A (Epoxidäquivalent 190) und 317 g Methoxypropanol werden auf 60°C erwärmt, innerhalb von 2 Stunden mit einer Mischung aus 116 g Ethylhexylamin und 163 g eines polymeren Amins (siehe unten) versetzt und bis zu einem MEQ-Wert von 2,06 reagiert. Anschließend werden 1330 g einer 75 %igen Lösung eines Bisphenol A-Epoxidharzes (Epoxidäquivalent 475) in Methoxypropanol zugegeben. In der Folge wird bei 60°C innerhalb einer Stunde eine Lösung von 189 g Diethanolamin in 176 g Methoxypropanol zugegeben und die Reaktion bis zu einem MEQ-Wert von 1,57 geführt. Nach weiterer Zugabe einer Lösung von 78 g Diethylaminopropylamin in 54 g Methoxypropanol innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLD; 6 g Harz + 4 g Methoxypropanol) von I - J wird mit Methoxypropanol auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.
   Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent 190) in 80 %iger Methoxypropanol-Lösung hergestellt. Das Produkt weist eine Viskosität (DIN 53 211/20°C; 100 g Harz + 30 g Methoxypropanol) von 60 bis 80 Sekunden auf.
b) 134 g Trimethylolpropan werden mit 160 g Malonsäurediethylester versetzt und bis zum Destillationsbeginn (ca. 140 - 150°C) erhitzt. Bei steigender Temperatur (bis 180°C) werden 46 g Ethanol abdestilliert. Nach beendeter Reaktion wird mit 128 g Diethylenglykoldimethylether verdünnt und auf 60°C gekühlt. Anschließend werden 264 g eines Reaktionsproduktes aus 1 Mol Toluylendiisocyanat und 1 Mol Ethylenglykolmonoethylether innerhalb von 4 Stunden zugegeben und bei 60°C auf einen NCO-Gehalt unter 0,02 Milliäquivalent pro g Probe reagiert.
   Das erhaltene Produkt hat einen Feststoffgehalt von 80 ± 2 Gew.-% (30 Minuten, 120°C), eine Viskosität nach GARDNER - HOLD (10 g Produkt + 2 g Diethylenglykoldiemthylether) von K und einen Brechungsindex n 20/d von 1,4960.
c) Die unter a) und b) erhaltenen Produkte werden im Verhältnis 70 : 30 (bezogen auf Feststoffgehalt) gemischt. Anschließend wird Milchsäure zugegeben, wobei deren zur Erreichung einwandfreier Wasserlöslichkeit erforderliche Menge in Vorversuchen ermittelt wurde. Es wird auf 70°C erhitzt und innerhalb von zwei Stunden Wismutdimethylolpropionat unter Rühren portionsweise in einer solchen Menge zugegeben, daß 1,5 Gew.-% Wismut, bezogen auf Feststoffgehalt, im Ansatz vorhanden sind. Anschließend wird noch 6 Stunden bei 60 - 70°C gerührt und zuletzt mit Methoxypropanol auf einen Feststoffgehalt von 65 Gew.-% verdünnt.
d) Entsprechend der Formulierung 100 Teile Bindemittel, 39,5 Teile Titandioxid und 0,5 Teile Ruß wird ein kathodisch abscheidbarer Elektrotauchlack mit 18 Gew.-% Feststoffgehalt in üblicher Weise hergestellt.

Das Intervall der minimalen Einbrenntemperatur dieses Kataphoreselacks wurde analog der in Beispiel 1 beschriebenen Methode zu 140 bis 160°C bestimmt.

### Beispiel 4 (Herstellung eines KTL)

Ein Kataphoreselack wurde gemäß EP-0 476 514 A1, Tabelle 4, Bindemittelmischung 11 (letzte Zeile der Tabelle) hergestellt.

Das Intervall der minimalen Einbrenntemperatur dieses Kataphoreselacks wurde analog der in Beispiel 1 beschriebenen Methode zu 180 bis 200°C bestimmt.

### Beispiel 5 bis 7 (Herstellung von Pulverlacken

Nach Vormischung der Pulverlackkomponenten (gemäß Rezept 5 - 7) mit einem schnellaufenden Pflugscharmischer wurde die Mischung in üblicher Weise aufgeschmolzen, extrudiert und nach dem Abkühlen in einer Pulvermühle vermahlen (Partikelgröße in Beispiel 5 und 6 unter 100 µm, Partikelgröße in Beispiel 7 unter 60 µm).

Das Intervall der minimalen Einbrenntemperatur der Pulverlacke wurde wie folgt festgestellt:

Die Pulverlacke gemäß Rezept 5, 6 und 7 wurden jeweils in 70 µm Schichtdicke auf 0,8 mm dicke Prüfbleche aus üblichem Karosseriestahl aufgebracht. Die Prüfbleche wurden 10 min. bei sich jeweils um in 10°C-Schritten unterscheidenden Objekttemperaturen, beginnend ab 120°C eingebrannt. Nach Abkühlen auf Raumtemperatur und 24-stündiger Lagerung bei 20°C wurde jeweils ein Direct-Impact-Test (vgl. ASTM D 2794) durchgeführt. Dazu wurde ein 4-pound-Gewicht mit einem Kugeldurchmesser von 5/8 Inch aus unterschiedlicher Höhe, gemessen in Inch, senkrecht im freien Fall auf die zu testende Lackschicht fallen gelassen. Die eingebeulte Lackschicht wurde jeweils visuell beurteilt. Überstand die eingebeulte Lackschicht diesen Test bei einem Wert von 20 Inch-pound (Produkt aus Fallhöhe und Gewicht) und größer, ohne daß mit dem bloßen Auge Beschädigungen wie Risse oder Abplatzungen zu beobachten waren, so war die Vernetzung eingetreten. Als Intervall der minimalen Einbrenntemperatur wurde dann der Bereich definiert, der jeweils um 10°C nach oben und nach unten von der so ermittelten Mindesteinbrenntemperatur abweicht. Es ergaben sich folgende Intervalle der minimalen Einbrenntemperatur: Rezept 5:170 - 190°C, Rezept 6:190 - 210°C, Rezept 7:150 - 170°C

### Rezept 5

- 30,4: Teile eines handelsüblichen, linearen Polyesters mit einer Säurezahl von 75
- 26,0: Teile eines handelsüblichen Bisphenol A-Epoxidharzes mit einem Epoxidäquivalentgewicht von 630
- 2,8: Teile eines handelsüblichen Verlaufsmittels auf Polyacrylatbasis in Form eines Masterbatches (15 %ig in einem OH-Polyester)
- 0,7: Teile Polyethylenwachs
- 0,5: Teile Benzoin
- 2,8: Teile eines handelsüblichen Katalysators für die Reaktion von Epoxid- mit Carboxylgruppen
- 6,8: Teile Bariumsulfat
- 28,5: Teile Titandioxid
- 0,1: Teile Eisenoxidgelb
- 1,4: Teile Eisenoxidschwarz

### Rezept 6

- 50,7: Teile eines handelsüblichen linearen Polyesters mit einer Glasübergangstemperatur von 68°C und einer Hydroxylzahl von 50
- 7,2: Teile eines handelsüblichen Verlaufsmittels in Form eines Masterbatches mit 10 % Wirkstoffgehalt
- 14,5: Teile eines handelsüblichen mit epsilon-Caprolactam blockierten Polyisocyanats auf cycloaliphatischer Basis mit einer latenten NCO-Zahl von 15,0
- 16,8: Teile Titandioxid
- 8,4: Teile Bariumsulfat
- 1,0: Teile Benzoin
- 0,1: Teile Mikrowachs
- 0,6: Teile eines Masterbatches RAL 7035 (in Calciumcarbonat)
- 0,7: Teile Ruß (10 % in Calciumcarbonat)

### Rezept 7

- 44,55: Teile eines handelsüblichen Bisphenol A-Epoxidharzes mit einem Epoxidäquivalentgewicht von 775
- 6,40: Teile des Verlaufsmittels aus Rezept 5
- 44,55: Teile eines handelsüblichen, linearen Polyesters mit einer Glasübergangstemperatur von 53°C und einer Säurezahl von 70
- 4,50: Teile eines handelsüblichen mit epsilon-Caprolactam blockierten Polyisocyanats auf Basis eines cycloaliphatischen Isocyanatadduktes mit einem Gehalt an blockiertem NCO von 9,5 Gew.-%

### Herstellung von Mehrschichtlackierungen

### Beispiel 8 (Vergleichsbeispiel)

Der Kataphoreselack gemäß Beispiel 1 wird in 20 µm Trockenschichtdicke durch kathodische Abscheidung auf ein Prüblech aus Karosseriestahl aufgebracht. Nach Abspülen überschüssiger Lackanteile mit vollentsalztem Wasser wird 25 min. bei 180°C (Objekttemperatur) eingebrannt. Auf das abgekühlte Substrat wird der Pulverlack aus Beispiel 5 bei 70 kV elektrostatisch in 70 µm Schichtdicke appliziert. Danach wird 15 min. bei 200°C (Objekttemperatur) eingebrannt. Nach dem Abkühlen wird auf das lackierte Probeblech ein handelsüblicher für die Automobilserienlackierung geeigneter Einschichtdecklack in einer Trockenschichtdicke von 40 µm aufgespritzt und 30 min. bei 130°C (Objekttemperatur) eingebrannt.

### Beispiel 9 (Vergleichsbeispiel)

Beispiel 8 wird wiederholt mit dem Unterschied, daß anstelle des Pulverlacks aus Beispiel 5 der Pulverlack aus Beispiel 6 verwendet wird.

### Beispiel 10 (Vergleichsbeispiel)

Beispiel 8 wird wiederholt mit dem Unterschied, daß anstelle des Kataphoreselacks aus Beispiel 1 der Kataphoreselack aus Beispiel 3 verwendet wird und das Einbrennen des Kataphoreselacks bei 160°C (Objekttemperatur) erfolgt.

### Beispiel 11 (Vergleichsbeispiel)

Beispiel 9 wird wiederholt mit dem Unterschied, daß anstelle des Kataphoreselacks aus Beispiel 1 der Kataphoreselack aus Beispiel 3 verwendet wird und das Einbrennen des Kataphoreselacks bei 160°C (Objekttemperatur) erfolgt.

### Beispiel 12 (Vergleichsbeispiel)

Beispiel 8 wird wiederholt mit dem Unterschied, daß anstelle des Kataphoreselacks aus Beispiel 1 der Kataphoreselack aus Beispiel 3 verwendet wird und das Einbrennen des Kataphoreselacks bei 160°C (Objekttemperatur) erfolgt und daß anstelle des Pulverlacks aus Beispiel 5 der Pulverlack aus Beispiel 7 verwendet wird (Spannung 35 kV) und das Einbrennen des Pulverlacks bei 180°C (Objekttemperatur) erfolgt.

### Beispiel 13 (erfindungsgemäß)

Der Kataphoreselack gemäß Beispiel 1 wird in 20 µm Trockenschichtdicke (ergibt sich, wenn solo eingebrannt wird) durch kathodische Abscheidung auf ein Prüfblech aus Karosseriestahl aufgebracht. Nach Abspülen überschüssiger Lackanteile mit vollentsalztem Wasser und 5-minütigem Trocknen bei 80°C (Objekttemperatur) im Trockenofen (Abluftbetrieb) wird der Pulverlack aus Beispiel 5 bei 70 kV elektrostatisch in 70 µm Schichtdicke trocken-in-naß appliziert. Danach wird 15 min. bei 200°C eingebrannt. Nach dem Abkühlen wird auf das lackierte Probeblech ein handelsüblicher für die Automobilserienlackierung geeigneter Einschichtdecklack in einer Trockenschichtdicke von 40 µm aufgespritzt und 30 min. bei 130°C (Objekttemperatur) eingebrannt.

### Beispiel 14 (erfindungsgemäß)

Beispiel 13 wird wiederholt mit dem Unterschied, daß anstelle des Pulverlacks aus Beispiel 5 der Pulverlack aus Beispiel 6 verwendet wird.

### Beispiel 15 (erfindungsgemäß)

Beispiel 13 wird wiederholt mit dem Unterschied, daß anstelle des Pulverlacks aus Beispiel 5 der Pulverlack aus Beispiel 7 verwendet wird (Spannung 35 kV) und das gemeinsame Einbrennen von KTL und Pulverlack bei 180°C (Objekttemperatur) durchgeführt wird.

### Beispiel 16 (erfindungsgemäß)

Beispiel 13 wird wiederholt mit dem Unterschied, daß anstelle des Kataphoreselacks aus Beispiel 1 der Kataphoreselack aus Beispiel 3 verwendet wird.

### Beispiel 17 (erfindungsgemäß)

Beispiel 14 wird wiederholt mit dem Unterschied, daß anstelle des Kataphoreselacks aus Beispiel 1 der Kataphoreselack aus Beispiel 3 verwendet wird.

### Beispiel 18 (erfindungsgemäß)

Beispiel 15 wird wiederholt mit dem Unterschied, daß anstelle des Kataphoreselacks aus Beispiel 1 der Kataphoreselack aus Beispiel 3 verwendet wird.

### Beispiel 19 (Vergleichsbeispiel)

Beispiel 8 wird wiederholt mit dem Unterschied, daß anstelle des Kataphoreselacks aus Beispiel 1 der Kataphoreselack aus Beispiel 4 verwendet wird und das Einbrennen des Kataphoreselacks bei 200°C (Objekttemperatur) erfolgt und daß anstelle des Pulverlacks aus Beispiel 5 der Pulverlack aus Beispiel 7 verwendet wird (Spannung 35 kV) und das Einbrennen des Pulverlacks bei 180°C (Objekttemperatur) erfolgt.

### Beispiel 20 (Vergleichsbeispiel)

Beispiel 8 wird wiederholt mit dem Unterschied, daß anstelle des Kataphoreselacks aus Beispiel 1 der Kataphoreselack aus Beispiel 4 verwendet wird und das Einbrennen des Kataphoreselacks bei 200°C (Objekttemperatur) erfolgt.

### Beispiel 21 (Vergleichsbeispiel)

Beispiel 15 wird wiederholt mit dem Unterschied, daß anstelle des Kataphoreselacks aus Beispiel 1 der Kataphoreselack aus Beispiel 4 verwendet wird und das gemeinsame Einbrennen von KTL und Pulverlack bei 200°C (Objekttemperatur) erfolgt.

### Beispiel 22 (Vergleichsbeispiel)

Beispiel 13 wird wiederholt mit dem Unterschied, daß anstelle des Kataphoreselacks aus Beispiel 1 der Kataphoreselack aus Beispiel 4 verwendet wird.

Der an den gemäß Beispiel 8 bis 22 hergestellten Mehrschichtlackierungen durchgeführte Reverse-Impact-Test¹⁾ (vgl. ASTM D 2794) ergibt folgende differenzierende Ergebnisse:

| Beispiel | Inch-pound | kg x m |
|---|---|---|
| 8 Vgl. | 45 | 0,5185 |
| 9 Vgl. | 45 | 0,5185 |
| 10 Vgl. | 40 | 0,4609 |
| 11 Vgl. | 40 | 0,4609 |
| 12 Vgl. | 35 | 0,4033 |
| 13 erfindungsgemäß | 55 | 0,6337 |
| 14 erfindungsgemäß | 60 | 0,6914 |
| 15 erfindungsgemäß | >80 | 0,9218 |
| 16 erfindungsgemäß | 50 | 0,5761 |
| 17 erfindungsgemäß | 50 | 0,5761 |
| 18 erfindungsgemäß | 70 | 0,8066 |
| 19 Vgl. | 40 | 0,4609 |
| 20 Vgl. | 30 | 0,3457 |
| 21 Vgl. | < 2 | <0,0230 |
| 22 Vgl. | <10 | <0,1152 |
| 1) 0,9072 kg, 15,875 mm (2 pound, 5/8 inch); Ausbeulen; bei Raumtemperatur nach ASTM D 2794. | | |

Der Wert in Inch-pound bzw. in kg x m gibt jeweils die Obergrenze für ein i.o.-Ergebnis an, d.h. mit dem bloßen Auge sind keine Risse oder Abplatzungen wahrnehmbar.

## Patentansprüche

1. Verfahren zur Herstellung von Mehrschichtlackierungen durch elektrophoretische Abscheidung einer ersten Überzugsschicht auf einem elektrisch leitenden Substrat aus einem wäßrigen ersten Überzugsmittel, Auftrag einer zweiten Überzugsschicht auf der Basis eines pulverförmigen zweiten Überzugsmittels, und gemeinsames Einbrennen der so erhaltenen Überzugsschichten, dadurch gekennzeichnet, daß man für die zweite Überzugsschicht ein pulverförmiges Überzugsmittel auf der Basis von Bindemitteln, die frei von auf Dienen basierenden Polymereinheiten sind, verwendet, wobei man die Überzugsmittel so wählt, daß das Intervall der minimalen Einbrenntemperatur der zweiten Überzugsschicht über dem der ersten Überzugsschicht liegt oder dieses so überlappt, daß die Untergrenze des Intervalls der zweiten Überzugsschicht oberhalb der Untergrenze des Intervalls der ersten Überzugsschicht liegt.

2. Verfahren nach Anspruch 1, dadurch gekennzeichnet, daß die Überzugsmittel so gewählt werden, daß das Intervall der minimalen Einbrenntemperatur des zweiten Überzugs über dem des ersten Überzugs liegt.

3. Verfahren nach einem der vorhergehenden Ansprüche, dadurch gekennzeichnet, daß man als erstes Überzugsmittel einen kathodischen Elektrotauchlack auf der Basis von zumindest teilweise neutralisierten, primäre, sekundäre und/oder tertiäre Aminogruppen enthaltenden, selbst- oder fremdvernetzenden Bindemitteln, mit einer Aminzahl von 20 bis 250 und einem Gewichtsmittel der Molmasse von 300 bis 10000 verwendet.

4. Verfahren nach Anspruch 3, dadurch gekennzeichnet, daß man Bindemittel auf der Basis von Aminoacrylatharzen, Aminoepoxidharzen, Aminopolyurethanharzen, aminogruppenhaltigen Polybutadienharzen oder modifizierten Epoxidharz-Kohlendioxid-Amin-Umsetzungsprodukten verwendet.

5. Verfahren nach Anspruch 3 oder 4, dadurch gekennzeichnet, daß man einen bleifreien kathodischen Elektrotauchlack verwendet.

6. Verfahren nach Anspruch 5, dadurch gekennzeichnet, daß man einen kathodischen Elektrotauchlack verwendet, der als Katalysatoren ein oder mehrere organische Wismutkomplexe und/oder Wismutsalze von Carbonsäuren enthält.

7. Verfahren nach einem der vorhergehenden Ansprüche, dadurch gekennzeichnet, daß man ein pulverförmiges Überzugsmittel auf der Basis von filmbildenden Basisharzen mit Glasübergangstemperaturen von 30 bis 120°C und einem Zahlenmittel der Molmasse von 500 bis 20000 verwendet.

8. Verfahren nach Anspruch 7, dadurch gekennzeichnet, daß man ein pulverförmiges Überzugsmittel verwendet, das frei von Pigmenten und Füllstoffen ist.

9. Verfahren nach Anspruch 8, dadurch gekennzeichnet, daß es zur Herstellung von Steinschlagschutzschichten, Zwischenschichten und Füllerschichten in Mehrschichtlackierungen durchgeführt wird.

10. Verfahren nach Anspruch 7, dadurch gekennzeichnet, daß man ein pulverförmiges Überzugsmittel verwendet, das frei von anorganischen Pigmenten und anorganischen Füllstoffen ist, und als Füllstoffe ein oder mehrere organische Polymerpulver enthält, die chemisch inert sind und unter Applikations- und Einbrennbedingungen nicht erweichen.

11. Verfahren nach Anspruch 10, dadurch gekennzeichnet, daß man als Polymerpulver solche auf der Basis von Aldehyd-Kondensationsprodukten, Polyacrylnitrilharzen und/oder Polyamid verwenden.

12. Verfahren nach einem der vorhergehenden Ansprüche, dadurch gekennzeichnet, daß die zweite Überzugsmittelschicht als Steinschlagschutzschicht, Füllerschicht, Decklackschicht oder Basislackschicht für Mehrschichtüberzüge aufgebracht wird.

13. Verfahren nach einem der vorhergehenden Ansprüche, dadurch gekennzeichnet, daß auf eine aus zwei Schichten bestehende erstellte Mehrschichtlackierung ein oder mehrere weitere Überzüge aufgebracht werden.

14. Verfahren nach einem der vorhergehenden Ansprüche, dadurch gekennzeichnet, daß es zur Herstellung von Mehrschichtlackierungen auf Kraftfahrzeugkarossen oder deren Teilen durchgeführt wird.

15. Elektrisch leitendes Substrat, beschichtet nach dem Verfahren eines der vorhergehenden Ansprüche.

## Claims

1. Process for the production of multi-layer lacquer coatings by electrophoretic deposition of a first coating layer of a first, aqueous coating composition onto an electrically conductive substrate, application of a second coating layer based on a second, pulverulent coating composition and combined stoving of the coating layers obtained in this manner, characterised in that a pulverulent coating composition is used for the second coating layer which contains no diene-based polymer units, wherein the coating compositions are selected such that the minimum stoving temperature interval of the second coating layer is above that of the first coating layer or overlaps therewith in such a manner that the lower limit of the second coating layer interval is above the lower limit of the first coating layer interval.

2. Process according to claim 1, characterised in that the coating compositions are selected such that the minimum stoving temperature interval of the second coating is above that of the first coating.

3. Process according to one of the preceding claims, characterised in that a cathodic electrocoating lacquer based on intrinsically or extrinsically crosslinking binders containing at least partially neutralised primary, secondary and/or tertiary amino groups, having an amine value of 20 to 250 and a weight average molecular weight of 300 to 10000, is used as the first coating composition.

4. Process according to claim 3, characterised in that binders based on aminoacrylate resins, aminoepoxy resins, aminopolyurethane resins, polybutadiene resins containing amino groups or modified epoxy resin/carbon dioxide/amine reaction products are used.

5. Process according to claim 3 or 4, characterised in that a lead-free cathodic electrocoating lacquer is used.

6. Process according to claim 5, characterised in that a cathodic electrocoating lacquer is used which contains one or more organic bismuth complexes and/or bismuth salts of carboxylic acids as catalysts.

7. Process according to one of the preceding claims, characterised in that a pulverulent coating composition based on film-forming base resins having glass transition temperatures of 30 to 120°C and a number average molecular weight of 500 to 20000 is used.

8. Process according to claim 7, characterised in that a pulverulent coating composition is used which contains neither pigments nor extenders.

9. Process according to claim 8, characterised in that it is performed to produce stone impact protection layers, interlayers and surfacer layers in multi-layer lacquer coatings.

10. Process according to claim 7, characterised in that a pulverulent coating composition is used which contains neither inorganic pigments nor inorganic extenders and contains as extenders one or more polymer powders which are chemically inert and do not soften under application and stoving conditions.

11. Process according to claim 10, characterised in that the polymer powders used are those based on aldehyde condensation products, polyacrylonitrile resins and/or polyamide.

12. Process according to one of the preceding claims, characterised in that the second coating composition layer is applied as a stone impact protection layer, surfacer layer, topcoat lacquer layer or base lacquer layer for multi-layer coatings.

13. Process according to one of the preceding claims, characterised in that one or more further coatings are applied onto a multi-layer lacquer coating consisting of two layers.

14. Process according to one or the preceding claims, characterised in that it is performed to produce multi-layer lacquer coatings on automotive bodywork or components thereof.

15. Electrically conductive substrate coated using the process of one of the preceding claims.

## Revendications

1. Procédé pour l'application de revêtements à plusieurs couches par déposition par électrophorèse d'une première couche de revêtement d'un premier produit de revêtement aqueux sur un substrat conducteur de l'électricité, application d'une deuxième couche de revêtement à base d'un deuxième produit de revêtement en poudre et cuisson en commun des couches de revêtements déposées, caractérisé en ce que, pour la deuxième couche de revêtement, on utilise un produit de revêtement en poudre à base de liants exempts de motifs polymères diéniques, et on choisit les produits de revêtement en sorte que l'intervalle de température minimale de cuisson de la deuxième couche de revêtement se situe au-dessus de celui de la première couche de revêtement ou chevauche celui-ci, la limite inférieure de l'intervalle de la deuxième couche de revêtement se situant au-dessus de la limite inférieure de l'intervalle de la première couche de revêtement.

2. Procédé selon la revendication 1, caractérisé ence que l'on choisit les produits de revêtement en sorte que l'intervalle de température minimale de cuisson du deuxième revêtement soit situé au-dessus de celui du premier revêtement.

3. Procédé selon l'une des revendications qui précèdent, caractérisé en ce que l'on utilise en tant que premier produit de revêtement une peinture à appliquer par électrodéposition cathodique à base de liants neutralisés en partie au moins, contenant des groupes amino primaires, secondaires et/ou tertiaires, autoréticulants ou réticulant sous l'action d'un additif approprié, à un indice d'amine de 20 à 250 et un poids moléculaire moyen, moyenne en poids, de 300 à 10 000.

4. Procédé selon la revendication 3, caractérisé en ce que l'on utilise des liants à base de résines d'aminoacrylates, de résines aminoépoxydiques, de résines d'aminopolyuréthannes, de résines de polybutadiène contenant des groupes amino ou de produits de réaction résine époxydique-dioxyde de carbone-amine modifiés.

5. Procédé selon la revendication 3 ou 4, caractérisé en ce que l'on utilise une peinture à appliquer par électrodéposition cathodique qui est exempte de plomb.

6. Procédé selon la revendication 5, caractérisé en ce que l'on utilise une peinture à appliquer par électrodéposition cathodique contenant en tant que catalyseurs un ou plusieurs complexes organiques de bismuth et/ou des sels de bismuth d'acides carboxyliques.

7. Procédé selon l'une des revendications qui précèdent, caractérisé en ce que l'on utilise un produit de revêtement en poudre à base de résines de base filmogènes ayant des températures de transition du second ordre de 30 à 120°C et un poids moléculaire moyen, moyenne en nombre, de 500 à 20 000.

8. Procédé selon la revendication 7, caractérisé en ce que l'on utilise un produit de revêtement en poudre exempt de pigments et de matières de charge.

9. Procédé selon la revendication 8, caractérisé en ce qu'on l'exploite pour l'application de couches de protection contre les jets de pierres, de couches intermédiaires et de couches de mastic dans des applications de revêtements à plusieurs couches.

10. Procédé selon la revendication 7, caractérisé en ce que l'on utilise un produit de revêtement en poudre qui est exempt de pigments minéraux et de matières de charge minérales et contient, en tant que matières de charge, une ou plusieurs poudres de polymères organiques chimiquement inertes et qui ne ramollissent pas dans les conditions de l'application et de la cuisson.

11. Procédé selon la revendication 10, caractérisé en ce que l'on utilise des poudres de polymères à base de produits de condensation d'aldéhydes, de résines de polyacrylonitrile et/ou de polyamides.

12. Procédé selon l'une des revendications qui précèdent, caractérisé en ce que la deuxième couche de produit de revêtement est appliquée en tant que couche de protection contre les jets de pierres, de couche de mastic, de couche de peinture de couverture ou de couche de peinture de base dans des applications de revêtements à plusieurs couches.

13. Procédé selon l'une des revendications qui précèdent, caractérisé en ce que, sur un revêtement à plusieurs couches consistant en deux couches, on applique un ou plusieurs autres revêtements.

14. Procédé selon l'une des revendications qui précèdent, caractérisé en ce qu'on l'exploite pour l'application de revêtements à plusieurs couches sur des carrosseries de véhicules ou des pièces de carrosseries de véhicules.

15. Substrat conducteur de l'électricité, revêtu par un procédé selon une des revendications qui précèdent.
